# FASCICULE DE BREVET EUROPEEN

(11) **EP 1 837 501 B1**
(45) Date de publication et mention de la délivrance du brevet: **24.11.2010**
(21) Numéro de dépôt: 07300799.9
(22) Date de dépôt: 20.02.2007
(51) Int. Cl.: F01N 3/36, F01N 3/20

(54) **Dispositif de dépollution des gaz d'échappement d'un moteur à combustion interne**
Verfahren zur Reinigung von Abgasen eines Verbrennungsmotors
Device for pollution control of the exhaust gases from an internal combustion engine

(30) Priorité: 20.02.2006 FR 0650589
(43) Date de publication de la demande: 26.09.2007
(73) Titulaire: Renault SAS, 92100 Boulogne Billancourt (FR)
(72) Inventeur: Arrighi, Pascal, 75016 Paris (FR); Bodin, Marc, 92500 Rueil Malmaison (FR)

(56) Documents cités:
- EP-A- 1 314 864
- WO-A-03/084647
- WO-A2-2006/055558
- JP-A- 2004 011 463

## Description

La présente invention concerne les dispositifs de dépollution des gaz d'échappement d'un moteur à combustion interne de véhicule automobile, et plus particulièrement les dispositifs de dépollution des gaz d'échappement qui comportent un injecteur de carburant fixé sur un composant de la ligne d'échappement du moteur.

Il est connu d'utiliser des dispositifs de dépollution des gaz d'échappement qui comportent un injecteur de carburant dans la ligne d'échappement du moteur. L'injecteur est fixé sur un composant de la ligne d'échappement et il comporte une connexion à un tuyau d'alimentation de carburant. Au cas où la connexion entre l'injecteur et le tuyau d'alimentation serait défaillante, il peut apparaître une fuite de carburant. Ce cas de défaillance peut poser un problème lorsque les dispositifs définissent un chemin d'écoulement qui commence au niveau de la connexion entre l'injecteur et le tuyau d'alimentation, et qui est dirigé vers la paroi du composant de la ligne d'échappement.

De tels dispositifs se trouvent par exemple dans les documents EP1314864 et WO03084647.

Une solution consiste à utiliser des dispositifs dont l'injecteur est incliné (par rapport à un plan longitudinal du véhicule), de sorte que la connexion de l'injecteur soit dirigée vers le bas, et que le chemin d'écoulement ne soit pas en direction d'une paroi chaude. Cependant, des dispositifs ne sont pas satisfaisants, car l'extrémité de l'injecteur se trouve dans une cavité formée dans la paroi du composant, et du carburant peut s'accumuler dans cette cavité au niveau de la zone de l'extrémité de l'injecteur dans le composant.

Un objectif de la présente invention est de pallier aux problèmes mentionnés ci-dessus.

Pour cela, l'invention concerne dispositif de dépollution des gaz d'échappement d'un moteur à combustion interne de véhicule automobile, le dispositif comportant un injecteur de carburant dans la ligne d'échappement du moteur fixé sur un composant de la ligne d'échappement et comportant une connexion à un tuyau d'alimentation de carburant, le dispositif définissant un chemin d'écoulement d'une éventuelle fuite de carburant provenant de la connexion vers la paroi du composant de la ligne d'échappement ; selon l'invention, le dispositif comporte au moins un élément en saillie pour dévier la fuite de carburant du chemin d'écoulement.

Le dispositif selon l'invention et ses avantages seront mieux compris à la lecture de la description détaillée d'un mode de réalisation pris à titre d'exemple et nullement limitatif, et illustré par les dessins sur lesquels :
- la figure 1 est un schéma du dispositif montrant le chemin d'écoulement vers la paroi du composant,
- la figure 2 est un schéma de l'invention selon un premier mode de réalisation,
- la figure 3 est un schéma de l'invention selon un deuxième mode de réalisation.

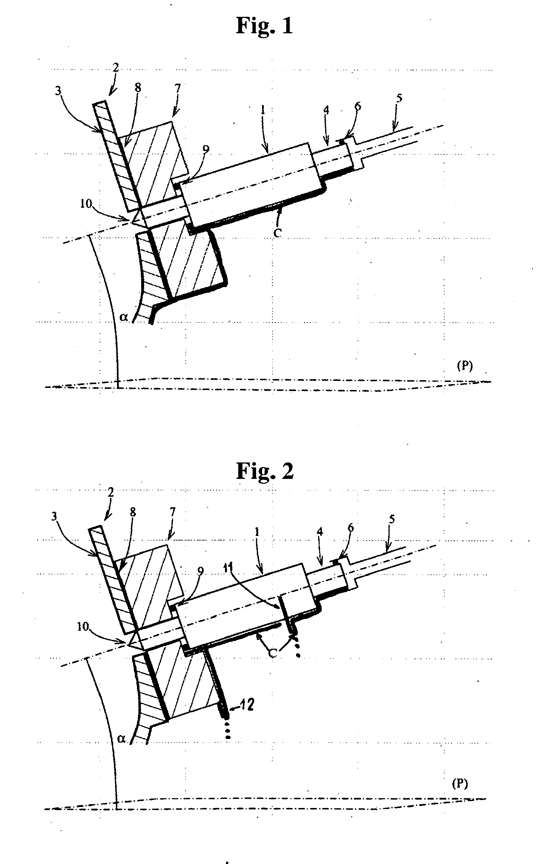

En référence à la figure 1 , le dispositif comporte un injecteur 1 de carburant dans la ligne d'échappement (non représentée) du moteur (non représenté). L'injecteur 1 peut être fixé sur un composant 2 de la ligne d'échappement, il peut être aussi fixé sur un bloc 7 servant de support à l'injecteur, comme on peut le voir sur la figure 1. L'injecteur 1 peut être fixé sur le bloc 7 par tout moyen connu de l'homme du métier, comme par exemple à l'aide d'une bride d'injecteur (non représentée). Un joint 9 est disposé entre une surface d'appui du bloc 7 et une surface d'appui de l'injecteur 1 pour assurer une étanchéité.

Le bloc 7 quant à lui peut être fixé sur le composant 1 par l'intermédiaire de vis (non représentées). Un joint d'étanchéité 8 est disposé entre une surface d'appui du composant 2 et une surface d'appui du bloc 7. La surface d'appui du bloc 7 peut aussi être appelé surface de jointure.

L'injecteur 1 comporte une connexion 4 à un tuyau 5 d'alimentation de carburant. Un joint 6 contribue à l'étanchéité de la connexion.

L'axe longitudinal de l'injecteur 1 est incliné d'un angle α par rapport à un plan P du véhicule. Pour des angles α compris entre 0 et 90 degrés, le dispositif définit un chemin C d'écoulement d'une éventuelle fuite de carburant vers la paroi 3 du composant 1 de la ligne d'échappement.

Selon l'invention, pour éviter qu'une éventuelle fuite de carburant ne suive le chemin d'écoulement, le dispositif comporte un moyen pour dévier la fuite de carburant du chemin d'écoulement C.

Selon un premier mode de réalisation représenté à la figure 2, le moyen peut comporter au moins un élément en saillie 11 ou 12. Cet élément constitue une barrière contre le chemin d'écoulement C de la fuite de carburant. Sa longueur est définie de sorte que la fuite s'écoule sans entrer en contact avec la paroi 3 du composant 2 de la ligne d'échappement.

Un élément en saillie 11 peut être fixé sur le corps de l'injecteur 1 , et/ou un élément en saillie 12 peut être fixé sur le bloc 7 recevant l'injecteur 1.

Le dispositif de dépollution peut comporter un ou plusieurs éléments en saillie.

Cet élément en saillie peut être fabriqué par tout moyen connu de l'homme du métier, il peut par exemple être réalisé lors du moulage des pièces dans le cas où elles sont moulées, il peut être fixé par soudage. Il peut également s'agir, de manière non limitative, d'un élément fixé mécaniquement par clipsage ou par vissage.

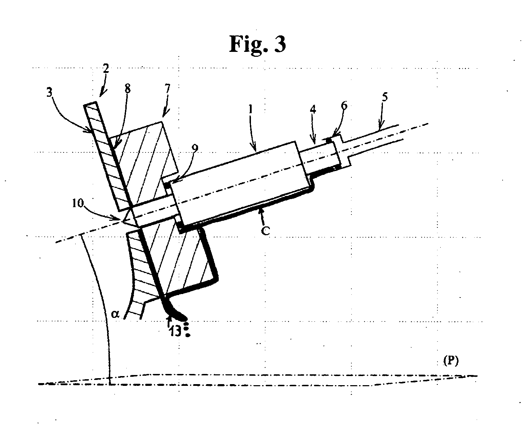

Selon un deuxième mode de réalisation, en référence à la figure 3, le moyen pour dévier la fuite de carburant peut comporter une portion 13 du joint d'étanchéité 8 qui dépasse de la surface de jointure du bloc 7 pour dévier la fuite de carburant du chemin d'écoulement C. Dans le cas où il n'y a pas de bloc 7 recevant l'injecteur, le joint d'étanchéité correspond au joint qui est disposé entre l'injecteur et le composant (variante non représentée).

La portion 13 du joint d'étanchéité 8 peut comporter une partie pliée ou courbée, et cette partie est réalisée de manière à ce que le carburant s'écoule sans entrer en contact avec la paroi 3 du composant 2. Pour améliorer le guidage de la fuite de carburant, la portion 13 peut comporter un bord arrondi, permettant de canaliser la fuite avant qu'elle ne goutte en un endroit précis, sans entrer en contact avec la paroi 3 du composant 2.

## Revendications

1. Dispositif de dépollution des gaz d'échappement d'un moteur à combustion interne de véhicule automobile, le dispositif comportant un injecteur (1) de carburant dans la ligne d'échappement du moteur fixé sur un composant (2) de la ligne d'échappement et comportant une connexion (4) à un tuyau (5) d'alimentation de carburant, le dispositif définissant un chemin (C) d'écoulement d'une éventuelle fuite de carburant provenant de la connexion (4) vers la paroi (3) du composant (2) de la ligne d'échappement, **caractérisé en ce qu'**il comporte au moins un élément en saillie (11 ; 12 ; 13) pour dévier la fuite de carburant du chemin d'écoulement (C) de manière à ce que le carburant s'écoule sans entrer en contact avec la paroi (3) du composant (2).

2. Dispositif selon la revendication 1, **caractérisé en ce qu'**un élément en saillie (11) est fixé sur le corps de l'injecteur (1).

3. Dispositif selon la revendication 1 ou 2, **caractérisé en ce qu'**un élément en saillie (12) est fixé sur un bloc (7) recevant l'injecteur (1).

4. Dispositif selon la revendication 1, **caractérisé en ce qu'**un élément en saillie pour dévier la fuite de carburant comporte une portion (13) d'un joint d'étanchéité (8) disposé entre l'injecteur et le composant ou entre le composant (2) et un bloc (7) recevant l'injecteur (1), la portion (13) dépassant de la surface de jointure pour dévier la fuite de carburant du chemin d'écoulement (C).

5. Dispositif selon la revendication 4, **caractérisé en ce que** la portion (13) du joint d'étanchéité (8) comporte une partie pliée ou courbée.

## Claims

1. Device for controlling the pollution emitted in the exhaust gases of a motor vehicle internal combustion engine, the device comprising a fuel injector (1) in the engine exhaust line, attached to a component (2) of the exhaust line and comprising a connection (4) to a fuel supply pipe (5), the device defining a path (C) along which any leak of fuel from the connection (4) can flow towards the wall (3) of the component (2) of the exhaust line, **characterized in that** it comprises at least one projecting element (11; 12; 13) to divert the fuel leak from the flow path (C) so that the fuel flows without coming into contact with the wall (3) of the component (2).

2. Device according to Claim 1, **characterized in that** a projecting element (11) is attached to the body of the injector (1).

3. Device according to Claim 1 or 2, **characterized in that** a projecting element (12) is attached to a unit (7) housing the injector (1).

4. Device according to Claim 1, **characterized in that** a projecting element for diverting the fuel leak comprises a portion (13) of a seal (8) positioned between the injector and the component or between the component (2) and a unit (7) housing the injector (1), the portion (13) protruding beyond the surface of the join so as to divert the fuel leak from the flow path (C).

5. Device according to Claim 4, **characterized in that** the portion (13) of the seal (8) comprises a bent or curved part.

## Patentansprüche

1. Vorrichtung zur Reinigung von Abgasen eines Verbrennungsmotors eines Kraftfahrzeugs, wobei die Vorrichtung ein Ventil (1) zum Einspritzen von Kraftstoff in die Abgasleitung des Motors umfasst, das an einer Komponente (2) der Abgasleitung befestigt ist und eine Verbindung (4) mit einem Kraftstoffzufuhrrohr (5) umfasst, wobei die Vorrichtung einen Strömungsweg (C) für eine etwaige Kraftstoffleckage von der Verbindung (4) zur Wand (3) der Komponente (2) der Abgasleitung definiert, **dadurch gekennzeichnet, dass** sie mindestens ein vorstehendes Element (11; 12; 13) zum Ablenken der Kraftstoffleckage von dem Strömungsweg (C) derart, dass der Kraftstoff fließt, ohne mit der Wand (3) der Komponente (2) in Kontakt zu treten, umfasst.

2. Vorrichtung nach Anspruch 1, **dadurch gekennzeichnet, dass** ein vorstehendes Element (11) an dem Einspritzventilkörper (1) befestigt ist.

3. Vorrichtung nach Anspruch 1 oder 2, **dadurch gekennzeichnet, dass** ein vorstehendes Element (12) an einem das Einspritzventil (1) aufnehmenden Block (7) befestigt ist.

4. Vorrichtung nach Anspruch 1, **dadurch gekennzeichnet, dass** ein vorstehendes Element zum Ablenken der Kraftstoffleckage einen Teil (13) einer Dichtung (8) umfasst, die zwischen dem Einspritzventil und der Komponente oder zwischen der Komponente (2) und einem das Einspritzventil (1) aufnehmenden Block (7) angeordnet ist, wobei der Teil (13) über die Verbindungsstellenfläche hinausgeht, um die Kraftstoffleckage vom Strömungsweg (C) abzulenken.

5. Vorrichtung nach Anspruch 4, **dadurch gekennzeichnet, dass** der Teil (13) der Dichtung (8) einen gebogenen oder gekrümmten Abschnitt umfasst.
